# EUROPEAN PATENT APPLICATION

(11) **EP 1 466 548 A1**
(43) Date of publication of application: **13.10.2004**
(21) Application number: 03008018.8
(22) Date of filing: 10.04.2003
(51) Int. Cl.: A47J 42/48

(54) **Grinder set for pepper grains, spices, coffee beans or the like**

(71) Applicant: Yang, Heng-Te, Tainan City (TW)
(72) Inventor: Yang, Heng-Te, Tainan City (TW)
(74) Representative: Kern, Wolfgang

(57) **Abstract**

A grinder for pepper grains, spices, coffee beans or the like in the invention has a driving device (2), at least one grinding device (3) capable of being placed with grain material to be ground therein and capable of being assembled together with the driving device to form a grinder for grinding, and at least one rack (5) capable of being placed with the at least one grinding device thereon, whereby a user may place different kinds of grain materials to be ground respectively in different grinding devices according to his need, and then select the grinding devices that are filled with the required grain materials to be assembled respectively with the driving device for promptly grinding the grain materials into particulates or powder so that the particulates or powder are capable of keeping their individual inherent smells and are convenient for immediate use in cooking or seasoning.

## Description

### BACKGROUND OF THE INVENTION

### 1. Field of the Invention

This invention relates to a grinder set for pepper grains, spices, coffee beans or the like, particularly to one mainly composed of a driving device, at least one grinding device, and at least one rack, wherein the at least one grinding device is capable of accommodating grain material to be ground therein, such as pepper grains, spices, coffee beans or the like, and capable of being assembled together with the driving device to form a grinder for grinding; the at least one rack is capable of being placed with the at least one grinding device thereon, whereby a user may place different kinds of grain materials to be ground respectively in different grinding devices according to his need, and then select the grinding devices that are filled with the required grain materials to be assembled respectively with the driving device for promptly grinding the grain materials into particulates or powder so that the particulates or powder are capable of keeping their individual inherent smells and are convenient for immediate use in cooking or seasoning.

### 2. Description of the Prior Art

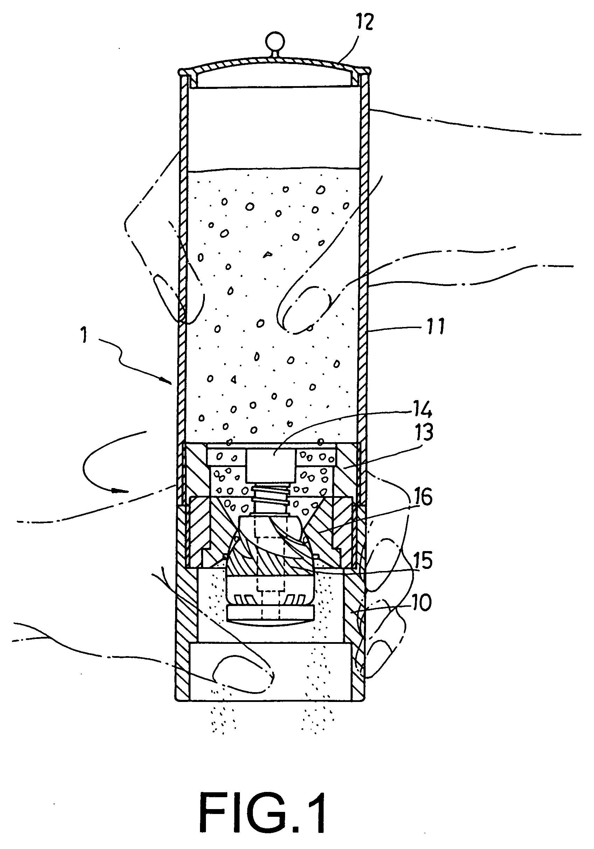

Generally speaking, as shown in Fig. 1, a known conventional grinder 1 mainly has a base 10, a container body 11 disposed above the base 10, and a cover 12 covered on a top of the container body 11. The container body 11 has a fixing seat 13 secured at a lower portion thereof. A spindle 14 has an upper portion coupled to the fixing seat 13 and a lower portion connected with a grinding member 15. The grinding member 15 is received in a grinding seat 16 secured in the base 10. In using, firstly remove the cover 12 from the container body 11, and then place grain material to be ground in the container body 11, such as pepper grains, spices, coffee beans or the like. Secondly, cover the cover 12 on the top of the container body 11, and then hold the base 10 and the container body 11 respectively with both hands and rotate them in two opposite directions so that the grain material placed between grinding teeth of the grinding seat 16 and the grinding member 15 that are engaged with each other can be ground into powder and fallen out of a lower end of the base 10 for further use in cooking or seasoning.

However, such conventional grinder 1 is designed to have one base 10 assembled with only one container body 11, which is very convenient to grind various grain materials for immediate use in cooking or seasoning because when a user intends to grind a different kind of grain material, firstly he has to remove remained unground grain material from the container body 11, and then clean powder residue out of the interior of the grinder 1. After that, another kind of grain material is allowed to be placed in the container body 11 for grinding. It is labor-consuming and time-consuming for the user to remove the remained unground grain material, clean the powder residue, and replace another kind of grain material. Unfortunately, the powder residue jammed in gaps of the interior of the grinder 1 and between the grinding teeth of the grinding seat 16 and the grinding member 15 is very hard to be cleaned out completely. And, the worst of it is that the smell of the former ground powder is likely to stay in the interior of the grinder 1 for a longer time, which is bad in keeping the inherent smells of any following grain materials to be ground.

### SUMMARY OF THE INVENTION

The main purpose of the invention is to offer a grinder set for pepper grains, spices, coffee beans or the like, the grinder set mainly composed of a driving device, at least one grinding device, and at least one rack, by which a user may place different kinds of grain materials to be ground respectively in different grinding devices according to his need, and then select the grinding devices that are filled with the required grain materials to be assembled respectively with the driving device for promptly grinding the grain materials into particulates or powder so that the particulates or powder are capable of keeping their individual inherent smells and are convenient for immediate use in cooking or seasoning; the grinding devices are capable of being supported and arranged in good order on the at least one rack, thus occupying little space for convenience of storage.

One primary feature of the invention is to provide a grinder set for pepper grains, spices, coffee beans or the like, the grinder set mainly including:
a driving device having a recessed chamber disposed at a bottom thereof, the recessed chamber provided with a driving journal protruded on a center of an inner wall surface thereof;
at least one grinding device each capable of being assembled together with the driving device to form a grinder for grinding, and having a chamber for accommodating grain material to be ground therein, and a grinding seat provided with a spindle protruded upwardly therefrom for being connected with the driving journal of the driving device so as to be brought to rotate by the driving device; and,
at least one rack adapted to be placed with the at least one grinding device thereon, each of the racks having a plurality of supporting sections for supporting the grinding devices, and a plurality of recesses disposed in an outer surface of a bottom thereof and corresponding to the plurality of supporting sections.

One another feature of the invention is to provide a grinder set for pepper grains, spices, coffee beans or the like, the grinder set mainly including:
a driving device having a recessed chamber disposed at a bottom thereof, the recessed chamber provided with a driving journal protruded on a center of an inner wall surface thereof;
at least one grinding device each capable of being assembled together with the driving device to form a grinder for grinding, and having a chamber for accommodating grain material to be ground therein, a grinding seat provided with a spindle protruded upwardly therefrom for being connected with the driving journal of the driving device so as to be brought to rotate by the driving device, and an annual flange protruded outwardly from a bottom end thereof; and,
a rack adapted to be mounted with the at least one grinding device thereon, the rack having a side plate disposed at one side thereof and provided with at least one hanging member, and a plurality of U-shaped supporting sections disposed thereon and each of the plurality of U-shaped supporting sections provided with an opening not oriented toward the side plate as well as an engagement groove formed in a side wall around the U-shaped periphery thereof for being fitted into and engaged with by the annual flange of each of the grinding devices.

### BRIEF DESCRIPTION OF DRAWINGS

This invention will be better understood by referring to the accompanying drawings, wherein:
Figure 1 is a schematic view showing a structure of a known conventional grinder;
Figure 2 is a perspective view of a grinder set for pepper grains, spices, coffee beans or the like in the present invention, showing a grinding device capable of be assembled with a driving device;
Figure 3 is a perspective view of the grinder set for pepper grains, spices, coffee beans or the like in the present invention, showing the grinding device capable of being assembled with a cover and placed on a rack of a first preferred embodiment;
Figure 4 is a schematic view of the grinder set for pepper grains, spices, coffee beans or the like in the present invention, showing that the racks of the first preferred embodiment arranged with grinding devices thereon are capable of being stacked up one by one;
Figure 5 is a perspective view of the grinder set for pepper grains, spices, coffee beans or the like in the present invention, showing the grinding device capable of being assembled with the cover and mounted on a rack of a second preferred embodiment; and,
Figure 6 is a side view of the grinder set for pepper grains, spices, coffee beans or the like in the present invention, showing the grinding device mounted on the rack of the second preferred embodiment.

### DETAILED DESCRIPTION OF THE PREFERRED EMBODIMENT

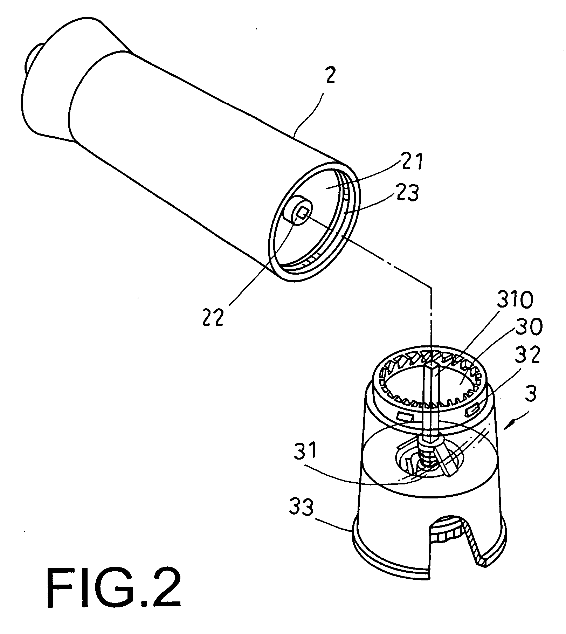

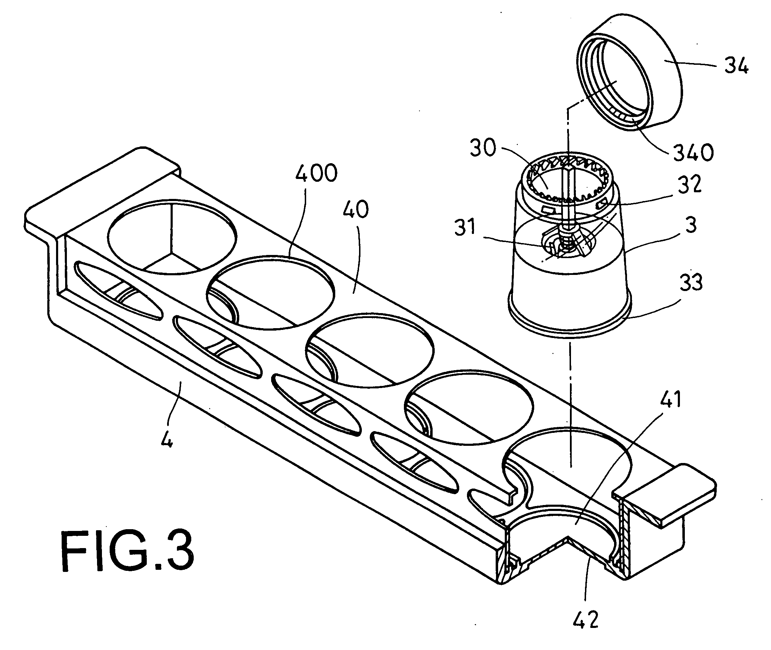

A preferred embodiment of a grinder set for pepper grains, spices, coffee beans or the like in the present invention, as shown in Figs. 2, 3 and 4, mainly includes a driving device 2, at least one grinding device 3 and at least one rack 4.

The driving device 2 has a recessed chamber 21 disposed at a bottom thereof. The recessed chamber 21 is provided with a driving journal 22 protruded on a center of an inner wall surface thereof, and a flanged ring 23 disposed on a side wall surface thereof.

Each of the grinding devices 3 is capable of being assembled together with the driving device 2 to form a grinder for grinding, and has a chamber 30 for accommodating grain material to be ground therein, a grinding seat 31, a plurality of engagement blocks 32 disposed on an outer wall surface of an upper portion thereof, and an annual flange 33 protruded outwardly from a bottom end thereof. The grinding seat 31 is provided with a spindle 310 protruded upwardly therefrom for being connected with the driving journal 22 of the driving device 2 so as to be brought to rotate by the driving device 2 to make the grinding seat 31 grind the grain material. The plurality of engagement blocks 32 are capable of being correspondingly engaged with the flanged ring 23 of the recessed chamber 21 of the driving device 2. Furthermore, a cover 34 capable of being covered on an upper portion of each of the grinding devices 3 is provided with a flanged ring 340 disposed on an inner side wall surface thereof for convenience of being correspondingly engaged with the plurality of engagement blocks 32 of each of the grinding devices 3.

Each of the racks 4 adapted to be placed with the grinding devices 3 thereon has a partition plate 40, a plurality of supporting sections 41 and a plurality of recesses 42. The partition plate 40 disposed at an upper portion thereof is provided with a plurality of through holes 400 for allowing the grinding devices 3 to be inserted therethrough so as to be held in place. The plurality of supporting sections 41 adapted to support the grinding devices 3 are disposed in an inner surface of a bottom of each of the racks 4 and corresponding to the plurality of through holes 400 of the partition plate 40. The plurality of recesses 42 are disposed in an outer surface of the bottom of each of the racks 4 and correspond to the plurality of supporting sections 41.

In assembling, firstly take one of the grinding devices 3 to make the spindle 310 of the grinding seat 31 of the grinding device 3 coupled to the driving journal 22 of the driving device 2, and then engage the engagement blocks 32 of the grinding device 3 with the flanged ring 23 of the recessed chamber 21 of the driving device 2, by which an assemblage of the grinder in the present invention is completed easily and quickly.

In using, firstly take one of the grinding devices 3, and then remove the cover 34 from the upper portion of the grinding device 3. Secondly, place grain material to be ground, such as pepper grains, spices, coffee beans or the like, in the chamber 30 of the grinding device 3. Thirdly, assemble the grinding device 3 with the driving device 2 quickly so that the spindle 310 of the grinding seat 31 of the grinding device 3 is capable of being brought to rotate by means of the driving device 2 to make the grinding seat 31 grind the grain material.

When a different kind of grain material is to be ground, only need to disassemble the grinding device 3 from the driving device 2, and then replace another one of the grinding devices 3 that has been filled with a required grain material therein to be assembled with the driving device 2 quickly for further grinding. In such way, a user may place different kinds of grain materials to be ground respectively in different grinding devices 3 according to his need, and then select the grinding devices 3 that are filled with the required grain materials to be assembled respectively with the driving device 2 for promptly grinding the grain materials into particulates or powder so that the particulates or powder are capable of keeping their individual inherent smells and are convenient for immediate use in cooking or seasoning.

When not in use, only need to disassemble the grinding device 3 from the driving device 2, cover the cover 34 on the upper portion of the grinding device 3, and then place the grinding device 3 on one of the racks 4.

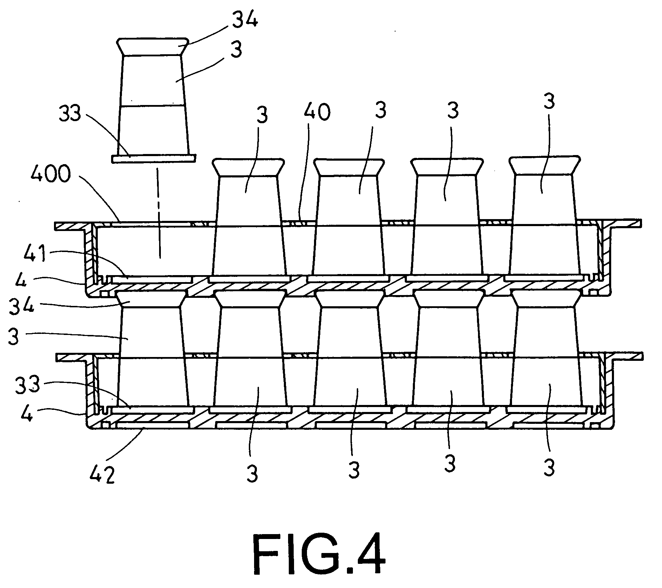

Moreover, the grinding devices 3 are capable of being supported and arranged in good order on the racks 4 by having the grinding devices 3 respectively inserted through the plurality of through holes 400 of the partition plates 40 of the racks 4 so as to be held in place, and firmly placed on the plurality of supporting sections 41 of the racks 4. Furthermore, the plurality of recesses 42 of the racks 4 disposed in the outer surfaces of the bottoms of the racks 4 and corresponding to the plurality of supporting sections 41 are capable of steadily holding the covers 34 of the grinding devices 3 placed on racks located at lower positions, thereby enabling the racks 4 that are placed with the grinding devices 3 thereon to be stacked up one by one to save storage space, as shown in Fig. 4.

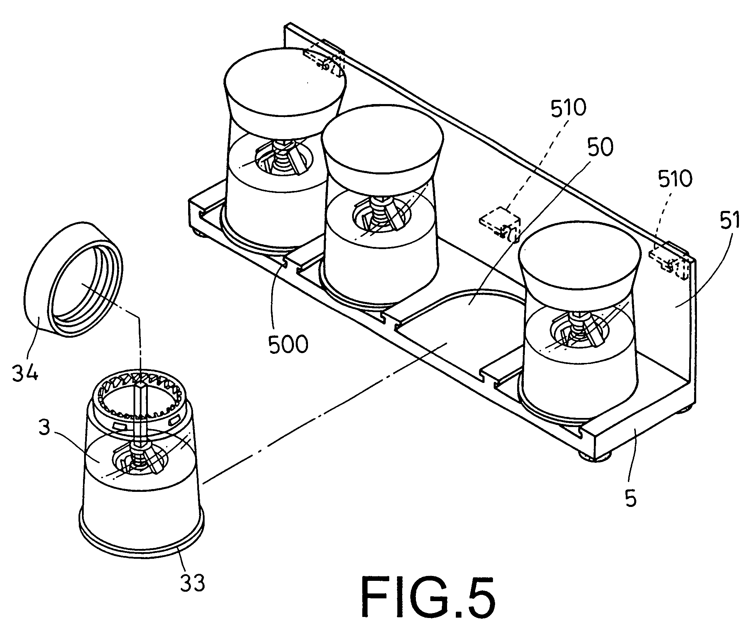

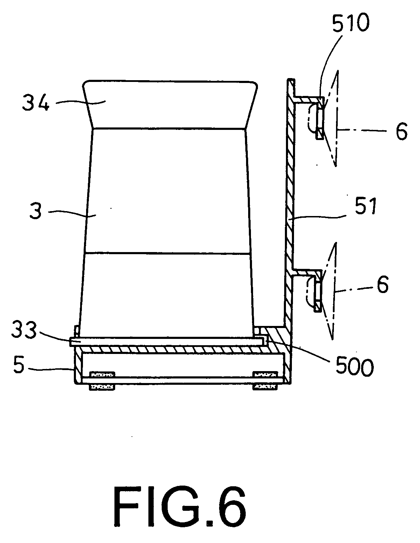

A second preferred embodiment of the grinder set for pepper grains, spices, coffee beans or the like in the present invention, as shown in Figs. 5 and 6, mainly includes a driving device 2, at least one grinding device 3 and a rack 5. The driving device 2 and the at least one grinding device 3 have the same structures as those in the first preferred embodiment of the grinder set. The rack 5 designed in an L shape has a side plate 51 disposed at an upright side thereof and a plurality of U-shaped supporting sections 50 disposed thereon. The side plate 51 is provided with a plurality of hanging members 510 thereon for hanging the rack 5 on a wall. Alternatively, a suction cup 6 is adapted to be connected with each of the hanging members 510 of the side plate 51 for attaching the rack 5 to a wall firmly. Each of the plurality of U-shaped supporting sections 50 is provided with an opening not oriented toward the side plate 51, and an engagement groove 500 formed in a side wall around the U-shaped periphery thereof for being fitted into and engaged with by the annual flange 33 of each of the grinding devices 3.

The invention has the following advantages and effects, as can be understood from the aforesaid description.
1. The grinder set of the present invention is equipped with a plurality of grinding devices 3, by which a user may place different kinds of grain materials, such as pepper grains, spices, coffee beans or the like, to be ground respectively in different grinding devices 3 according to his need, and then select the grinding devices 3 that are filled with the required grain materials to be assembled respectively with the driving device 2 for promptly grinding the grain materials into particulates or powder, convenient for immediate use in cooking or seasoning.
2. With the design of a plurality of grinding devices 3 for selectively assembled with the driving device 2 for grinding different kinds of grain materials into particulates or powder, the grinder set of the present invention is capable of keeping the particulates or powder with their individual inherent smells without being mixed with smells of other different kinds of grain materials.
3. The grinding devices 3 in the present invention has the plurality of engagement blocks 32 for being engaged with or disengaged with the flanged ring 23 of the driving device 2 (or the flanged ring 340 of the cover 34) so that the grinding devices 3 are able to be assembled with or disassembled from the driving device 2 (or the cover 34) quickly, which is very simple and convenient in operation.
4. Each of the racks 4 in the first preferred embodiment has the partition plate 40 provided with the plurality of through holes 400 for allowing the grinding devices 3 to be inserted therethrough so as to be held in place, and the plurality of supporting sections 41 for supporting the grinding devices 3 stably.
5. Each of the racks 4 in the first preferred embodiment has the plurality of recesses 42 for holding the grinding devices 3 that are located at lower positions steadily without the danger of sliding away or falling down, thereby allowing the racks 4 that are supported with grinding devices 3 to be stacked up one by one to save storage space.
6. The rack 5 in the second preferred embodiment designed in an L shape has the plurality of U-shaped supporting sections 50 each provided with an opening not oriented toward the side plate 51 and the engagement groove 500 formed in a side wall around the U-shaped periphery thereof for being fitted into and engaged with by the annual flange 33 of each of the grinding devices 3 so that the grinding devices 3 are capable of being mounted on the rack 5 firmly.
7. The rack 5 in the second preferred embodiment has the side plate 51 provided with the plurality of hanging members 510 thereon for hanging the rack 5 on a wall, thereby fully utilizing the three-dimensional space.
8. The suction cups 6 adapted to be connected with the hanging members 510 of the side plate 51 of the rack 5 are also capable of attaching the rack 5 to a wall firmly.

While the preferred embodiment of the invention has been described above, it will be recognized and understood that various modifications may be made therein and the appended claims are intended to cover all such modifications that may fall within the spirit and scope of the invention.

## Claims

1. A grinder set for pepper grains, spices, coffee beans or the like, said grinder set comprising:
a driving device having a recessed chamber disposed at a bottom thereof, said recessed chamber provided with a driving journal protruded on a center of an inner wall surface thereof;
at least one grinding device each capable of being assembled together with said driving device to form a grinder for grinding, and having a chamber for accommodating grain material to be ground therein, and a grinding seat provided with a spindle protruded upwardly therefrom for being connected with said driving journal of said driving device so as to be brought to rotate by said driving device;
at least one rack adapted to be placed with said at least one grinding device thereon, each of said racks having a plurality of supporting sections for supporting said grinding devices, and a plurality of recesses disposed in an outer surface of a bottom thereof and corresponding to said plurality of supporting sections; and,
whereby a user may place different kinds of grain materials to be ground respectively in different said grinding devices according to his need, and then select said grinding devices that are filled with said required grain materials to be assembled respectively with said driving device for promptly grinding said grain materials into particulates or powder so that said particulates or powder are capable of keeping their individual inherent smells and are convenient for immediate use in cooking or seasoning; said grinding devices are capable of being supported and arranged in good order on said racks by means of said supporting sections; said grinding devices placed on said racks located at lower positions are capable of being firmly held in place by said recesses of said racks located at upper positions, convenient for said racks that are supported with grinding devices to be stacked up one by one to save storage space.

2. The grinder set for pepper grains, spices, coffee beans or the like as claimed in claim 1, wherein each of said racks has a partition plate disposed at an upper portion thereof and provided with a plurality of through holes corresponding to said supporting sections of each of said racks for allowing said grinding devices to be inserted therethrough so as to be held in place.

3. A grinder set for pepper grains, spices, coffee beans or the like, said grinder set comprising:
a driving device having a recessed chamber disposed at a bottom thereof, said recessed chamber provided with a driving journal protruded on a center of an inner wall surface thereof;
at least one grinding device each capable of being assembled together with said driving device to form a grinder for grinding, and having a chamber for accommodating grain material to be ground therein, a grinding seat provided with a spindle protruded upwardly therefrom for being connected with said driving journal of said driving device so as to be brought to rotate by said driving device, and an annual flange protruded outwardly from a bottom end thereof;
a rack adapted to be mounted with said at least one grinding device thereon, said rack having a side plate disposed at one side thereof and provided with at least one hanging member, and a plurality of U-shaped supporting sections disposed thereon, and each of said plurality of U-shaped supporting sections provided with an opening not oriented toward said side plate as well as an engagement groove formed in a side wall around the U-shaped periphery thereof for being fitted into and engaged with by said annual flange of each of said grinding devices; and,
whereby a user may place different kinds of grain materials to be ground respectively in different said grinding devices according to his need, and then select said grinding devices that are filled with said required grain materials to be assembled respectively with said driving device for promptly grinding said grain materials into particulates or powder so that said particulates or powder are capable of keeping their individual inherent smells and are convenient for immediate use in cooking or seasoning; said grinding devices are capable of being firmly mounted and arranged in good order on said supporting sections of said rack by making said annual flanges of said grinding devices respectively fitted into and engaged with said engagement grooves of said supporting sections of said rack; said rack is capable of being conveniently hung on a wall by means of said at least one hanging member of said side plate of said rack.

4. The grinder set for pepper grains, spices, coffee beans or the like as claimed in claim 3, wherein a suction cup is capable of being connected with each of said hanging members of said side plate of said rack for attaching said rack to a wall firmly.

5. The grinder set for pepper grains, spices, coffee beans or the like as claimed in claim 1 or 3, wherein a plurality of engagement blocks are disposed on an outer wall surface of an upper portion of each of said grinding devices; a flanged ring is disposed on a side wall surface of said recessed chamber of said driving device for being correspondingly engaged with said plurality of engagement blocks of each of said grinding devices quickly.

6. The grinder set for pepper grains, spices, coffee beans or the like as claimed in claim 1 or 3, wherein a plurality of engagement blocks are disposed on an outer wall surface of an upper portion of each of said grinding devices; a cover capable of being covered on an upper portion of each of said grinding devices is provided with a flanged ring disposed on an inner side wall surface thereof for convenience of being correspondingly engaged with said plurality of engagement blocks of each of said grinding devices.
